# FASCICULE DE BREVET EUROPEEN

(11) **EP 1 589 710 B1**
(45) Date de publication et mention de la délivrance du brevet: **24.10.2007**
(21) Numéro de dépôt: 05300303.4
(22) Date de dépôt: 20.04.2005
(51) Int. Cl.: H04L 12/56

(54) **Procédé et dispositif de communication simultanée sur plusieurs sous-réseaux de communication fonctionnant selon la norme DECT**
Verfahren und Vorrichtung zur simultanen Kommunikation in mehreren Kommunikationssubnetzen nach dem DECT-Standard
Method and apparatus for simultaneous communication on several communication sub-networks according to DECT-standard

(30) Priorité: 21.04.2004 FR 0450759
(43) Date de publication de la demande: 26.10.2005
(73) Titulaire: Sagem Défense Sécurité, 75015 Paris (FR)
(72) Inventeur: Gérard, Frédéric, 75015 PARIS (FR)
(74) Mandataire: Camus, Olivier Jean-Claude

(56) Documents cités:
- US-A- 6 026 297
- US-A- 6 130 886
- US-A1- 2003 013 474
- US-B1- 6 405 027
- PERSSON K ET AL: "Bluetooth scatternet formation: criteria, models and classification" 2004 IEEE, 5 janvier 2004 (2004-01-05), pages 59-64, XP010696800
- HAARTSEN J: "BLUETOOTH - THE UNIVERSAL RADIO INTERFACE FOR AD HOC, WIRELESS CONNECTIVITY" ON - ERICSSON REVIEW, ERICSSON. STOCKHOLM, SE, no. 3, 1998, pages 110-117, XP000783249 ISSN: 0014-0171

## Description

### DOMAINE TECHNIQUE DE L'INVENTION

La présente invention a pour objet un procédé de communication simultanée sur plusieurs sous-réseaux de communication fonctionnant selon la norme DECT (Digital European Cordless Telephone en anglais pour téléphone numérique sans fil européenne). Elle a pour objectif essentiel de proposer un procédé et un dispositif de communication autorisant la communication simultanée, au moyen d'un appareil unique, sur au moins un premier sous réseau DECT et un deuxième sous réseau DECT. Une application particulière de l'invention est une application militaire : dans une telle application, un chef de groupe peut, grâce au procédé et au dispositif de communication selon l'invention, commander ses hommes en utilisant un premier sous-réseau de communication DECT, tout en recevant des instructions de ses supérieurs via un deuxième sous-réseau de communication DECT.

Le domaine de l'invention est, d'une façon générale, celui de la téléphonie sans fil obéissant à la norme DECT. La norme DECT est une norme Européenne de téléphone sans fil, fonctionnant sur la bande de fréquence 1880 MHz (Méga-Hertz) à 1900 MHz.

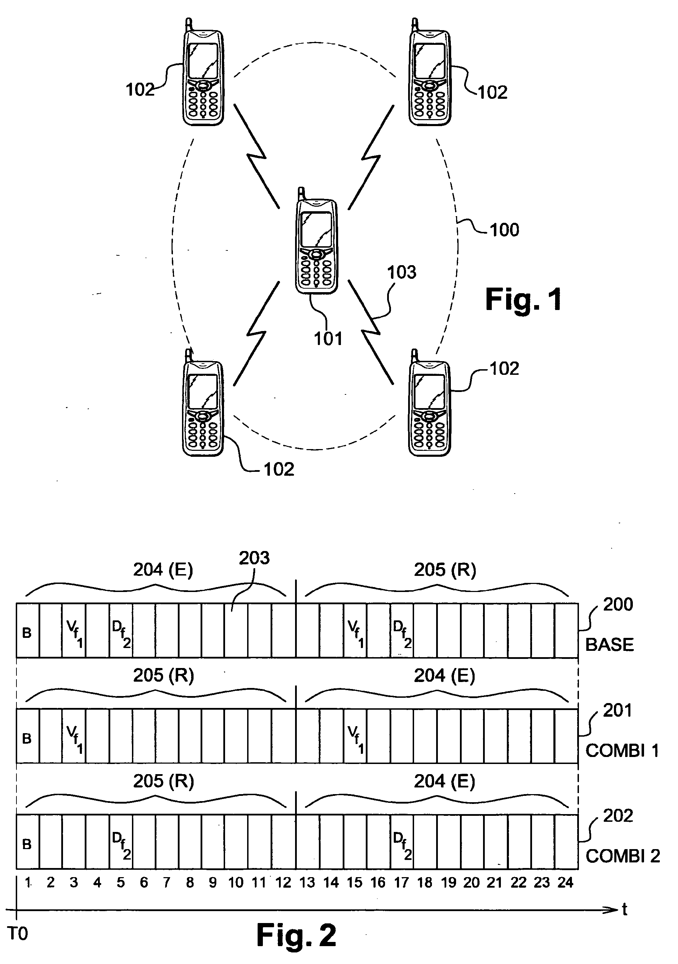

La figure 1 illustre schématiquement l'organisation d'un sous-réseau DECT. Pour constituer un sous-réseau DECT 100, il est nécessaire de disposer d'un ensemble d'équipements, formant une chaîne d'équipements, constitué d'une base de communication 101 et d'une pluralité de combinés 102 qui sont abonnés à la base considérée. D'une façon générale, on dit qu'un combiné est abonné à une base lorsqu'il existe une reconnaissance mutuelle entre le combiné et la base considérés qui leur permet de communiquer ensemble. La base d'un sous-réseau DECT constitue le noeud central du sous-réseau considéré: c'est par elle que transitent l'ensemble des informations échangées entre les combinés appartenant à un sous-réseau ; elle permet par ailleurs d'adresser simultanément des informations à différents combinés qui lui sont abonnés.

Les informations échangées au sein d'un sous-réseau peuvent être des informations de phonie, pour que deux possesseurs de combinés puissent se parler, ou des informations de données. Elles sont échangées par des signaux radio 103, qui sont émis lors de cycles de communication à des fréquences définies dans la norme DECT. La norme DECT applique la technologie TDMA (Time Division Multiple Access en Anglais, pour Accès Multiple à Répartition dans le Temps) pour organiser l'émission et la réception des différentes informations entre la base 101 et les combinés 102. Une telle application est illustrée à la figure 2. Sur cette figure, on a représenté un premier cycle de communication 200, un deuxième cycle de communication 201, et un troisième cycle de communication 202, qui correspondent respectivement à un cycle de communication de la base 101, à un cycle de communication d'un premier combiné COMBI 1, et à un cycle de communication d'un deuxième combiné COMBI 2. Les cycles de communication correspondent à des intervalles de temps, de durée constante, qui sont découpés en un certain nombre de fenêtres temporelles 203, ou slots, de durées identiques. Dans le cas du DECT, on compte 24 slots, numérotés de 1 à 24 à la figure 2, dans chaque cycle de communication qui dure 10 millisecondes.

Chaque cycle de communication comporte une première partie 204, dite cycle d'émission, et une deuxième partie 205, dite cycle de réception, qui comportent chacune 12 slots consécutifs. Lorsqu'un équipement d'un sous-réseau est dans une phase d'émission, il émet, pendant ses cycles d'émission 204, des informations vers un autre équipement du même sous-réseau, et lorsqu'il est dans une phase de réception, il est, pendant ses cycles de réception 205, en attente d'informations provenant d'un autre équipement du sous-réseau auquel lui-même appartient.

Pour qu'un sous-réseau de communication DECT soit mis en activité, c'est à dire pour que l'on puisse échanger des informations sur le sous-réseau considéré, il est indispensable que la base soit en fonctionnement ; cette dernière a la capacité d'émettre, dès sa mise sous tension et pendant ses cycles d'émission, un signal de balise B qui est reçu par les différents combinés de son sous-réseau, et qui permet à ces différents combinés d'avoir une référence temporelle. Grâce au signal de balise B, on obtient ainsi dans le sous-réseau considéré, une synchronisation des échanges lors des cycles de communication entre les différents combinés et la base associée ; par synchronisation des échanges d'informations lors des cycles, on désigne le fait que les différents cycles débutent à un même instant, T0 dans le cas des cycles 200, 201 et 202, que pendant une phase d'émission de la base, les différents combinés sont en réception, et que pendant une phase de réception de la base, les différents combinés sont en réception, comme illustré à la figure 2.

Dans l'exemple représenté, la base émet son signal de balise B pendant le slot 1 ; pendant le slot 3, elle émet un message phonique Vf1 à une première fréquence f1 vers le premier combiné COMBI 1; pendant le slot 5, elle émet un message de données Df2 à une deuxième fréquence f2 vers le deuxième combiné COMBI 2; pendant le slot 15, c'est le premier combiné qui envoie à la base un message phonique Vf1, et pendant le slot 17, c'est le deuxième combiné qui envoie à la base un message de données Df2. A chaque besoin de communiquer avec la base, chaque combiné détermine une fréquence et un slot, parmi les ressources disponibles en émission, sur lesquels il va communiquer avec la base.

D'une façon générale, chaque cycle de communication est constitué de slots dits slots actifs, qui sont susceptibles d'être utilisés pour véhiculer des informations dans un sous-réseau, et de slots dits slots de transition qui ne sont pas utilisés pour communiquer dans le sous-réseau considéré. La présence de slots de transition dans les cycles de communication utilisés par un sous-réseau DECT sont indispensables pour laisser le temps à un module radio de la base, et du combiné, de basculer en fréquence pour recevoir ou émettre une information à une fréquence différente de la dernière information reçue ou émise. Typiquement, dans chaque cycle de communication, un slot sur deux est un slot de transition.

Dans l'invention, on cherche à rendre possible l'utilisation d'un dispositif de communication qui serait capable de communiquer à la fois sur un premier sous-réseau et sur un deuxième sous-réseau de communication DECT du type de celui représenté à la figure 1, les deux sous-réseaux utilisant des cycles de communication du type de ceux montrés à la figure 2. La solution n'est pas triviale car la norme DECT ne prévoit pas qu'un même poste puisse communiquer et échanger des données simultanément en étant à la fois base et combiné au sein de deux chaînes d'équipement distinctes.

### ARRIERE-PLAN TECHNOLOGIQUE DE L'INVENTION

Le document US 6 405 027 divulgue un dispositif de communication portable qui est configuré pour communiquer d'une part, par l'intermédiaire d'une première liaison sans fil de communication, avec une station de base par exemple d'un réseau DECT, et d'autre part, par l'intermédiaire d'une ou plusieurs liaison de communication selon la norme bluetooth, avec un ou plusieurs autres terminaux de communication.

Dans l'état de la technique, on connaît notamment les différentes publications relatives à la norme DECT, notamment les documents EN 300 175-1, EN 300 175-2, EN 300 175-3, EN 300 175-4 EN 300 175-5, EN 300 175-6, EN 300 175-7, EN 300 175-8, ainsi qu'un premier document D1 intitulé "T77BMC-DECT-xVxx-T3-7600, BMC Firmware Spécification for DECT Infineon, Preliminary Data Sheet, V1.3", publié en janvier 2001, et un deuxième document D2 intitulé "PMB 7610, Infineon, Preliminary Specification, V1.1", publié en Octobre 2003, auxquels l'homme du métier pourra se référer pour obtenir des précisions relatives à la norme DECT et/ou à certains éléments intervenant dans la suite de la description.

Aucun des documents de l'état de la technique ne prévoit de solutions pour rendre possible l'accès simultané, en tant que base et combiné, à deux sous-réseaux distincts au moyen d'un dispositif de communication fonctionnant selon la norme DECT.

### DESCRIPTION GENERALE DE L'INVENTION

C'est un objet essentiel de l'invention de répondre à un tel besoin. Dans l'invention, on propose un dispositif de communication qui constitue un noeud d'un réseau DECT, c'est à dire un dispositif de communication qui est capable de communiquer simultanément sur un premier sous-réseau de communication DECT, et sur un deuxième sous-réseau de communication DECT, chaque sous-réseau étant du type de celui représenté à la figure 1.

A cet effet, on propose, dans l'invention, d'associer, au sein d'un même dispositif de communication, un équipement appartenant à un premier sous-réseau de communication DECT, et un deuxième équipement appartenant à un deuxième sous-réseau de communication DECT. En outre, dans l'invention, on propose de synchroniser les deux sous-réseaux pour éviter des collisions radio entre les deux équipements réunis dans le dispositif de communication selon l'invention. Pour ce faire, on propose notamment d'utiliser les fenêtres temporelles de transition du premier sous-réseau comme fenêtre temporelles actives du deuxième sous-réseau.

L'invention concerne donc essentiellement un procédé de communication simultanée sur plusieurs sous-réseaux de communication fonctionnant selon la norme DECT, chaque sous-réseau étant constitué d'une chaîne d'équipements, avec notamment un premier sous réseau constitué d'une première chaîne d'équipements et un deuxième sous-réseau constitué d'une deuxième chaîne d'équipements, dans lequel :
- chaque chaîne d'équipement comporte une base et un ensemble de combinés abonnés à ladite base ;
- chaque combiné d'une chaîne d'équipement communique avec la base à laquelle il est abonné en échangeant des informations, par voie radio, lors de cycles de communication ;
- chaque cycle de communication est divisé en un ensemble de fenêtres temporelles qui se distinguent en :
- un premier sous-ensemble de fenêtres temporelles - dites fenêtres temporelles actives - susceptibles d'être utilisées pour véhiculer des informations de communication entre ladite base et un quelconque des combinés abonnés à ladite base ;
- un deuxième sous-ensemble de fenêtres temporelles - dites fenêtres temporelles de transition - qui ne sont pas susceptibles d'être utilisées pour véhiculer des informations de communication entre ladite base et un quelconque des combinés abonnés à ladite base ;
caractérisé en ce qu'il comporte les différentes étapes consistant à :
- rassembler, au sein d'un dispositif de communication, notamment un premier dispositif de communication, la base de la première chaîne d'équipements avec un premier équipement de la deuxième chaîne d'équipements;
- échanger des informations de communication entre le premier équipement de la deuxième chaîne d'équipements et un deuxième équipement de la deuxième chaîne d'équipements pendant les fenêtres temporelles de transition des cycles de communication entre les combinés de la première chaîne d'équipements et la base de la première chaîne d'équipements.

Le procédé selon l'invention peut comporter, en plus des caractéristiques principales qui viennent d'être mentionnées dans le paragraphe précédent, une ou plusieurs caractéristiques supplémentaires parmi les suivantes:
- le premier équipement de la deuxième chaîne d'équipements est un combiné de la deuxième chaîne d'équipements, et en ce que le deuxième équipement de la deuxième chaîne d'équipements est la base de la deuxième chaîne d'équipements ;
- le premier équipement de la deuxième chaîne d'équipements est la base de la deuxième chaîne d'équipements, et le deuxième équipement de la deuxième chaîne d'équipements un combiné de la deuxième chaîne d'équipements ;
- le procédé comporte l'étape supplémentaire consistant à pourvoir la base de la première chaîne d'équipements de fonctions audio ;
- le procédé comporte l'étape supplémentaire consistant à adapter une synchronisation des échanges lors des cycles de communication entre les combinés de la première chaîne d'équipements et la base de la première chaîne d'équipements en fonction d'une synchronisation des échanges lors des cycles de communication entre le premier équipement de la deuxième chaîne d'équipements et le deuxième équipement de la deuxième chaîne d'équipements ;
- le procédé comporte l'étape supplémentaire consistant à transmettre un signal de synchronisation depuis le premier équipement de la deuxième chaîne d'équipement vers la base de la première chaîne d'équipements pour adapter la synchronisation des échanges lors des cycles de communication entre les combinés de la première chaîne d'équipements et la base de la première chaîne d'équipements en fonction de la synchronisation des échanges lors des cycles de communication entre le premier équipement de la deuxième chaîne d'équipements et le deuxième équipement de la deuxième chaîne d'équipements ;
- le signal de synchronisation est transmis par une liaison conductrice reliant la base de la première chaîne d'équipements au premier équipement de la deuxième chaîne d'équipements ;
- le signal de synchronisation est transmis à la base de la première chaîne d'équipement via une interface de synchronisation externe de ladite base ;
- l'étape d'adaptation de la synchronisation des échanges d'informations lors des cycles de communication entre les combinés de la première chaîne d'équipements et la base de la première chaîne d'équipements en fonction d'une synchronisation des échanges d'information lors des cycles de communication entre le premier équipement de la deuxième chaîne d'équipements et le deuxième équipement de la deuxième chaîne d'équipements comporte, lorsque le premier équipement de la deuxième chaîne d'équipements est actif lors d'une mise en activité du premier sous-réseau, l'étape supplémentaire consistant à bloquer l'envoi d'un signal de balise émis par la base de la première chaîne d'équipements tant que le signal de synchronisation n'a pas été reçu et pris en compte par la base de la première chaîne d'équipements ;
- l'étape d'adaptation de la synchronisation des échanges d'informations lors des cycles de communication entre les combinés de la première chaîne d'équipements et la base de la première chaîne d'équipements en fonction d'une synchronisation des échanges d'informations lors des cycles de communication entre le premier équipement de la deuxième chaîne d'équipements et le deuxième équipement de la deuxième chaîne d'équipements comporte, lorsque le premier équipement de la deuxième chaîne d'équipements n'est pas actif lors d'une mise en activité du premier sous-réseau, les différentes étapes supplémentaires consistant à :
- émettre un signal de balise au moyen de la base de la première chaîne d'équipements pour caler dans le temps les différents combinés de la première chaîne d'équipements;
- détecter une mise en activité du premier équipement de la deuxième chaîne d'équipements ; le cas échéant, décaler progressivement la synchronisation des échanges d'informations lors des cycles de communication entre les combinés de la première chaîne d'équipements et la base de la première chaîne d'équipements jusqu'à ce que cette synchronisation soit en opposition de phase avec la synchronisation des échanges d'informations lors des cycles de communication entre le premier équipement de la deuxième chaîne d'équipements et le deuxième équipement de la deuxième chaîne d'équipements ;
- le procédé comporte l'étape supplémentaire consistant à permettre la réception simultanée des deux équipements au sein du dispositif de communication ;
- le procédé comporte l'étape supplémentaire consistant à faire émettre deux signaux de balise par la base du sous-réseau de la deuxième chaîne d'équipement. En choisissant un écart temporel le plus grand possible au sein d'un cycle de communication, on favorise alors la détection de l'une des deux balises par le premier équipement de la première chaîne d'équipement ;
- le procédé comporte les différentes étapes supplémentaires consistant à :
- associer, au sein d'un deuxième dispositif de communication, une base d'une troisième chaîne d'équipements, constituant un troisième sous-réseau, avec un troisième équipement de la deuxième chaîne d'équipements;
- échanger des informations de communication entre le troisième équipement de la deuxième chaîne d'équipements et un autre équipement de la deuxième chaîne d'équipements pendant les fenêtres temporelles de transition des cycles de communication échangées entre les combinés de la troisième chaîne d'équipements et la base de la troisième chaîne d'équipements.
- le procédé comporte les différentes étapes supplémentaires consistant à :
- associer, au sein d'un deuxième dispositif de communication, une base d'une chaîne d'équipements supplémentaire, constituant un sous-réseau supplémentaire, avec un deuxième équipement de la première chaîne d'équipements;
- échanger des informations de communication entre le deuxième équipement de la première chaîne d'équipements et la base de la première chaîne d'équipements pendant les fenêtres temporelles de transition des cycles de communication échangées entre des combinés de la chaîne d'équipements supplémentaire et la base de la chaîne d'équipements supplémentaire.

C'est également un objet de l'invention de proposer un dispositif de communication intervenant dans le procédé selon l'invention pour communiquer simultanément sur plusieurs sous-réseaux de communication fonctionnant selon la norme DECT, chaque sous-réseau étant constitué d'une chaîne d'équipements, avec notamment un premier sous réseau constitué d'une première chaîne d'équipements et un deuxième sous-réseau constitué d'une deuxième chaîne d'équipements, chaque chaîne d'équipement comportant une base et un ensemble de combinés abonnés à ladite base, chaque combiné d'une chaîne d'équipement communiquant avec la base à laquelle il est abonné en échangeant, par voie radio, des informations lors de cycles de communication divisés en un ensemble de fenêtres temporelles qui se distinguent en :
- un premier sous-ensemble de fenêtres temporelles - dites fenêtres temporelles actives - susceptibles d'être utilisées pour véhiculer des informations de communication entre ladite base et un des combinés abonnés à ladite base ;
- un deuxième sous-ensemble de fenêtres temporelles - dites fenêtres temporelles de transition - qui ne sont pas susceptibles d'être utilisées pour véhiculer des informations de communication entre ladite base et un des combinés abonnés à ladite base ;
caractérisé en ce que le dispositif de communication comporte :
- une base d'une première chaîne d'équipements ;
- un premier équipement d'une deuxième chaîne d'équipements;
- des moyens pour échanger des informations de communication entre le premier équipement de la deuxième chaîne d'équipements et un deuxième équipement de la deuxième chaîne d'équipements pendant les fenêtres temporelles de transition des cycles de communication échangées entre les combinés de la première chaîne d'équipements et la base de la première chaîne d'équipements. Les moyens intervenant sont par exemple les modules d'émission réception des équipements DECT associés à un module de synchronisation, présent par exemple dans la base de la première chaîne d'équipements, pour permettre de synchroniser la base de la première chaîne d'équipements en opposition de phase avec le premier équipement de la deuxième chaîne d'équipements.

Le premier équipement de la deuxième chaîne d'équipements peut être un combiné - respectivement la base - de la deuxième chaîne d'équipements, et le deuxième équipement de la deuxième chaîne d'équipements peut être la base - respectivement un combiné - de la deuxième chaîne d'équipements.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- à la figure 1, déjà décrite, une représentation schématique d'un sous réseau de communication DECT.
- à la figure 2, également déjà décrite, une représentation schématique de différentes cycles de communication utilisés dans les sous-réseaux DECT ;
- à la figure 3, une représentation schématique d'une organisation d'équipements illustrant l'objet de l'invention ;
- à la figure 4, une représentation schématique de différentes cycles de communication utilisés dans le procédé et le dispositif selon l'invention ;
- à la figure 5, une illustration d'une généralisation possible du procédé selon l'invention.

### DESCRIPTION DES FORMES DE REALISATION PREFEREES DE L'INVENTION

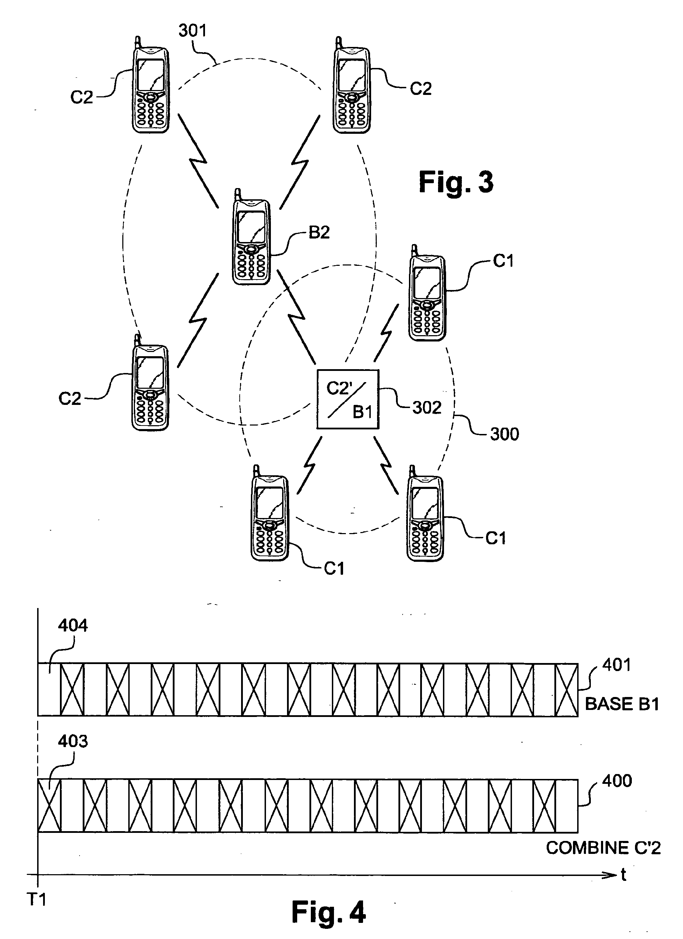

A la figure 3, on a représenté un premier sous-réseau DECT 300 et un deuxième sous-réseau DECT 301. Le premier sous-réseau, respectivement le deuxième sous-réseau, est matérialisé par une chaîne d'équipements comportant une base B1, respectivement B2, et une pluralité de combinés C1, respectivement C2. Dans l'invention, on prévoit avantageusement d'équiper les différentes bases de fonctions audio ; un utilisateur en possession d'une telle base peut ainsi communiquer directement - en échangeant des paroles - avec les utilisateurs possédant des combinés du sous-réseau auquel appartient la base considérée. Equiper une base de fonctions audio permet donc à cette base de disposer des capacités de communication d'un combiné.

Un noeud commun aux deux sous-réseaux est constitué par un dispositif de communication 302 selon l'invention. Le dispositif 302 est capable de communiquer sur le premier sous-réseau 300 et sur le deuxième sous-réseau 301. A cet effet, on prévoit, dans l'invention, de disposer dans le dispositif 302, un des équipements du premier sous-réseau 300 et un des équipements du deuxième sous-réseau 301. Dans l'exemple représenté, les équipements disposés dans le dispositif 302 sont la base B1 du premier sous-réseau et un combiné du deuxième sous-réseau, qui sera ultérieurement désigné par la référence C2' pour le distinguer des autres combinés C2. On peut parler d'un combiné C'2 et d'une base B1 co-localisés. Dans d'autres exemples de réalisation du dispositif 302 selon l'invention, et/ou de mise en oeuvre du procédé selon l'invention, on prévoit de disposer dans le dispositif 302 soit les deux bases B1 et B2, soit un combiné appartenant à chacun des deux sous-réseaux. Ces exemples ne seront pas particulièrement détaillés par la suite, l'adaptation du procédé selon l'invention qui va être décrit au regard de l'exemple illustré à la figure 3 étant directement transposable à ces exemples.

Dans l'exemple illustré, le dispositif 302 sert donc de base au premier sous-réseau 300, et constitue un combiné pour le deuxième sous-réseau 301. Il permet donc, notamment, de remplir parfaitement l'application militaire qui a été précédemment mentionnée. Une difficulté apparaît cependant du fait de la proximité de la base B1 et du combiné C2' : ces deux équipements étant réunis dans un même boîtier, ils ne sont distants que de quelques centimètres. Les risques de collision radio entre ces deux équipements sont alors très importants. Ces risques de collision radio sont d'autant plus importants que l'un des deux équipements du dispositif 302 est constitué par une base. En effet, la norme DECT prévoit que la puissance de transmission d'une base et d'un combiné est importante, de l'ordre de 250 mW (milliWatts). Une base à proximité directe, c'est à dire à une distance de l'ordre de plusieurs centimètres, typiquement entre 1 et 20 centimètres, d'un combiné non abonné à cette base se comporte donc comme un véritable brouilleur pour ce combiné, et vis versa lorsque le combiné émet : dans l'exemple illustré, le combiné C'2 qui se trouvera dans une phase de réception alors que la base B1 est dans une phase d'émission sera fréquemment soumise à des pertes d'informations et/ou des réductions de débit aléatoires; une dégradation de ses étages de réception pouvant même se produire.

Dans l'invention, on propose donc, afin de pouvoir partager les temps d'émission, les temps de réception et la gamme de fréquence disponible en DECT de telle sorte que les collisions radio entre les deux équipements du dispositif 302 disparaissent, de synchroniser ces deux équipements. D'une façon plus large, pour synchroniser ces deux équipements, on propose, dans l'invention, de synchroniser les deux sous-réseaux 300 et 301.

La réalisation d'une telle synchronisation des deux sous-réseaux est détaillée à la figure 4. Sur cette figure, on a représenté un premier cycle de communication 400 du combiné C'2 et un deuxième cycle de communication 401 de la base B1. Dans l'invention, on prévoit que ces deux cycles sont en opposition de phase ; c'est à dire que l'on choisit d'une part qu'un slot 403 du premier cycle débute à un même instant T1 qu'un slot 404 du deuxième cycle, et d'autre part que les slots de transition de l'un des deux cycles 401 ou 402, représentés barrés d'une croix sur la figure 4, correspondent aux slots actifs de l'autre cycle. Avec une telle organisation, on peut ainsi permettre, en outre, la réception simultanée des deux équipements rassemblés dans le dispositif de communication selon l'invention.

Comme on l'a vu précédemment, la norme DECT prévoit typiquement qu'un slot sur deux des cycles de communication soit un slot de transition ; toute autre répartition des slots de transition au sein d'un cycle est envisageable dans le procédé selon l'invention, tant qu'il est possible d'aboutir à une synchronisation dans laquelle les deux cycles des équipements co-localisés dans le dispositif 302 ne présentent pas de slots actifs simultanés.

L'instant T1 peut marquer le début simultané des deux cycles de communication 400 et 401, mais ce n'est pas une obligation. L'instant T1 doit au minimum marquer le début simultané des deux slots 403 et 404. Avantageusement, on prévoit cependant dans le procédé selon l'invention que le premier cycle 400 débute, à l'instant T1, par sa phase de réception, et que le deuxième cycle 401 débute, au même instant T1, par sa phase d'émission.

Dans l'exemple représenté à la figure 3, où une base et un combiné sont co-localisés dans le dispositif 302, on prévoit que la synchronisation des échanges d'informations lors des cycles dans le premier sous-réseau 300 dépende de la synchronisation des échanges d'informations lors des cycles dans le deuxième sous-réseau 301. En d'autre termes, le premier sous-réseau 300 va disposer de cycles de communication dont l'instant marquant son début est imposé par la position temporelle des cycles de communication du deuxième sous-réseau, tout en respectant l'opposition de phase précédemment mentionnée.

Pour ce faire, on prévoit notamment dans le procédé selon l'invention, que la base B1 récupère une information de synchronisation disponible dans le combiné C'2, cette information de synchronisation étant relative à la synchronisation des échanges d'informations lors des cycles dans le deuxième sous-réseau. L'information de synchronisation peut notamment se présenter sous la forme d'un signal de synchronisation transmis par une liaison conductrice par le combiné C'2 à la base B1.

Deux cas de figure peuvent alors se présenter :
- soit, lors du démarrage de la base B1, le deuxième sous-réseau - ou tout au moins le combiné C'2 -est en activité, c'est à dire qu'il existe une synchronisation des échanges d'informations lors des cycles dans le deuxième sous-réseau 301 et que le combiné C'2 est calé temporellement sur cette synchronisation : dans ce cas, la base B1 exploite immédiatement l'information de synchronisation pour imposer au premier sous-réseau 300 des cycles de communication en opposition de phase avec celle du deuxième sous-réseau, notamment par une émission adaptée de son signal de balise ;
- soit, lors du démarrage de la base B1, le deuxième sous-réseau - ou tout au moins le combiné C'2 -n'est pas en activité, c'est à dire qu'il n'existe pas de synchronisation des échanges d'informations lors des cycles dans le deuxième sous-réseau et que le combiné C'2 n'est donc pas calé temporellement sur cette synchronisation : dans ce cas, la base B1 émet, sans contrainte extérieure, son signal de balise pour définir librement une synchronisation temporelle des échanges d'informations lors des cycles de communication dans le premier sous-réseau.

Lors de la mise en activité du deuxième sous-réseau 301, le combiné C'2 se cale temporellement sur la base B2 pour respecter la synchronisation des échanges d'informations lors des cycles de communication dans le deuxième sous-réseau 301 ; la base B1 peut alors obtenir le signal de synchronisation, et l'exploiter pour provoquer progressivement un décalage de la synchronisation des échanges d'informations lors des cycles dans le premier sous-réseau jusqu'à ce qu'elle soit en opposition de phase avec celle du deuxième sous-réseau. A cet effet, la base B1 peut soit retarder, soit avancer, progressivement l'émission de son signal de balise, sur lequel les différents combinés C1 se caleront temporellement, conformément aux spécifications de la norme DECT. Dans ce cas de figure, on prévoit, par exemple, toujours dans le soucis d'éviter les collisions radio, de ne pas autoriser les échanges d'informations - autres que le signal de balise et les informations indispensables au fonctionnement du deuxième sous-réseau-entre la base B2 et au moins le combiné C'2 tant que le premier sous-réseau n'est pas en opposition de phase avec le deuxième sous-réseau.

Dans le cas où ce sont deux bases qui sont co-localisées dans le dispositif 302, il n'est pas nécessaire de faire la distinction entre les deux cas de figure qui viennent d'être détaillés ; il suffit que la première des deux bases activée émette le signal de synchronisation vers la deuxième des deux bases lors de sa mise en activité.

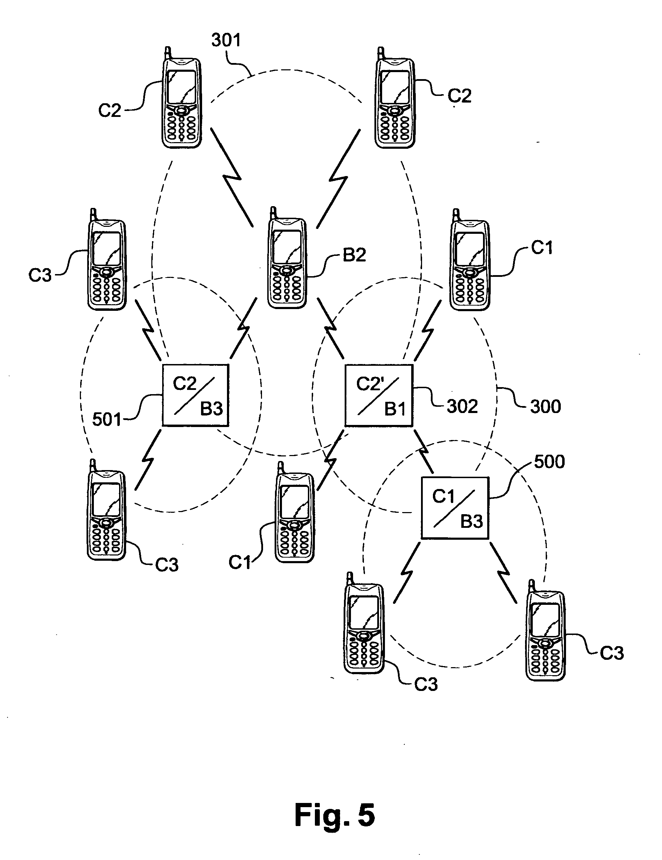

Le procédé selon l'invention peut s'étendre à l'utilisation de sous-réseaux supplémentaires : on peut ainsi envisager l'utilisation d'au moins un troisième sous-réseau, utilisant une troisième chaîne d'équipements avec une troisième base B3 et des combinés C3. Deux possibilités d'extension du procédé selon l'invention, illustrées à la figure 5, sont réalisables :
- soit on associe, au sein d'un deuxième dispositif 500, la troisième base B3 avec un des combinés C1 du premier sous-réseau pour aboutir à une structure dite en cascade.
- soit on associe, au sein d'un deuxième dispositif 501, la troisième base B3 avec un des combinés C2 du deuxième sous-réseau pour aboutir à une structure dite en étoile.

Les deux possibilités d'extension qui viennent d'être précisées peuvent être mises en oeuvre simultanément ou de façon distincte.

Dans le premier cas, le deuxième sous-réseau et le troisième sous-réseau seront synchrones, c'est à dire qu'ils présenteront, dans leurs cycles de communication, des slots de transition aux mêmes instants ; dans le deuxième cas, ce sont le premier sous-réseau et le troisième sous-réseau qui seront synchrones.

Dans un exemple particulier de l'invention, on prévoit que les signaux de synchronisation véhiculés par une liaison conductrice entre deux éléments co-localisés sont transmis à une interface de synchronisation externe de l'équipement destinataire. Par exemple, une telle interface peut être une interface dite interface IOM, connue de l'homme du métier, qui permet, dans l'état de la technique, de synchroniser une base DECT sur un réseau numérique de type RNIS. On peut également utiliser les mécanismes de synchronisation externes du type de ceux utilisés dans l'état de la technique pour effectuer les opérations de gestion de l'itinérance des combinés - ou roaming.

Un exemple de réalisation de la synchronisation entre une base et un combiné co-localisé au sein d'un même dispositif selon l'invention est à présent détaillé.

Une solution envisagée dans l'invention pour procéder à la synchronisation de la base B1, pour que ses cycles soient en opposition de phase avec les cycles de communication du deuxième sous-réseau est, comme on l'a mentionné, de décaler progressivement dans le temps la synchronisation des échanges d'informations lors des cycles de communication du premier sous-réseau. A cet effet, on peut par exemple utiliser le registre CNTUP (CouNTer Update register), présent dans une mémoire de la base, qui permet d'augmenter ou d'écourter, une fois par cycle, la durée d'un cycle d'une durée correspondant à un temps bit. La norme DECT prévoyant que chaque slot permet de contenir les informations de 480 bits, et étant donné que la base B1 et le combiné C'2 doivent être désynchronisés au maximum d'une durée correspondant à la durée d'un slot, la durée maximale de synchronisation des deux équipements co-localisés est de 4,8 secondes (480 fois la durée d'un cycle).

Le décalage entre les slots de la base B1 et du combiné C'2 est déterminé en comparant des signaux de contrôle radio de la base B1 et ceux du combiné C'2. Ce décalage est calculé par exemple au moyen d'un module numérique externe, par exemple de type EPLD. Le signal de synchronisation est alors issu de ce module ; il est appliqué à un port d'un composant bande de base de la base B1, et est utilisé pour modifier le registre CNTUP. Le signal de synchronisation permet donc d'indiquer si une synchronisation entre les deux équipements co-localisés doit être effectuée ou non, et, dans l'affirmative, s'il faut augmenter ou écourter le cycle d'un bit.

Les signaux de contrôle choisis sont par exemple :
- pour la base B1, le signal de contrôle d'émission PAON, qui est généré par un module BMC (Burst Mode Controller) du composant bande de base de la base ; les caractéristiques de ce signal sont décrites par exemple dans le document D1 cité dans l'état de la technique ;
- pour le combiné C'2, le signal de contrôle de réception RXON ; les caractéristiques de ce signal sont décrites par exemple dans le document D2 cité dans l'état de la technique.

## Revendications

1. - Procédé de communication simultanée sur plusieurs sous-réseaux de communication fonctionnant selon la norme DECT, chaque sous-réseau étant constitué d'une chaîne d'équipements, avec notamment un premier sous réseau (300) constitué d'une première chaîne d'équipements et un deuxième sous-réseau (301) constitué d'une deuxième chaîne d'équipements, dans lequel :
- chaque chaîne d'équipement comporte une base et un ensemble de combinés abonnés à ladite base ;
- chaque combiné d'une chaîne d'équipement communique avec la base à laquelle il est abonné en échangeant, par voie radio, des informations lors de cycles de communication ;
- chaque cycle de communication est divisé en un ensemble de fenêtres temporelles qui se distinguent en :
- un premier sous-ensemble de fenêtres temporelles - dites fenêtres temporelles actives - susceptibles d'être utilisées pour véhiculer des informations de communication entre ladite base et l'un quelconque des combinés abonnés à ladite base ;
- un deuxième sous-ensemble de fenêtres temporelles - dites fenêtres temporelles de transition - qui ne sont pas susceptibles d'être utilisées pour véhiculer des informations de communication entre ladite base et l'un quelconque des combinés abonnés à ladite base ;
**caractérisé en ce qu'**il comporte les différentes étapes consistant à :
- rassembler, au sein d'un dispositif de communication, notamment un premier dispositif de communication (302), la base (B1) de la première chaîne d'équipements avec un premier équipement (C'2) de la deuxième chaîne d'équipements;
- échanger des informations de communication entre le premier équipement (C'2) de la deuxième chaîne d'équipements et un deuxième équipement de la deuxième chaîne d'équipements pendant les fenêtres temporelles de transition des cycles de communication entre les combinés de la première chaîne d'équipements et la base de la première chaîne d'équipements.

2. Procédé selon la revendication précédente **caractérisé en ce que** le premier équipement de la deuxième chaîne d'équipements est un combiné de la deuxième chaîne d'équipements, et **en ce que** le deuxième équipement de la deuxième chaîne d'équipements est la base de la deuxième chaîne d'équipements.

3. - Procédé selon la revendication 1 **caractérisé en ce que** le premier équipement de la deuxième chaîne d'équipements est la base de la deuxième chaîne d'équipements, et le deuxième équipement de la deuxième chaîne d'équipements un combiné de la deuxième chaîne d'équipements.

4. Procédé selon l'une au moins des revendications précédentes **caractérisé en ce qu'**il comporte l'étape supplémentaire consistant à pourvoir la base de la première chaîne d'équipements de fonctions audio.

5. - Procédé selon l'une au moins des revendications précédentes **caractérisé en ce qu'**il comporte l'étape supplémentaire consistant à adapter une synchronisation des échanges d'informations lors des cycles de communication entre les combinés de la première chaîne d'équipements et la base de la première chaîne d'équipements en fonction d'une synchronisation des échanges d'informations lors des cycles de communication entre le premier équipement de la deuxième chaîne d'équipements et le deuxième équipement de la deuxième chaîne d'équipements.

6. - Procédé selon la revendication précédente **caractérisé en ce qu'**il comporte l'étape supplémentaire consistant à transmettre un signal de synchronisation depuis le premier équipement de la deuxième chaîne d'équipement vers la base de la première chaîne d'équipements pour adapter la synchronisation des échanges d'informations lors des cycles de communication entre les combinés de la première chaîne d'équipements et la base de la première chaîne d'équipements en fonction de la synchronisation des échanges d'informations lors des cycles de communication entre le premier équipement de la deuxième chaîne d'équipements et le deuxième équipement de la deuxième chaîne d'équipements.

7. - Procédé selon la revendication précédente **caractérisé en ce que** le signal de synchronisation est transmis par une liaison conductrice reliant la base de la première chaîne d'équipements au premier équipement de la deuxième chaîne d'équipements.

8. Procédé selon l'une au moins des revendications 6 ou 7 **caractérisé en ce que** le signal de synchronisation est transmis à la base de la première chaîne d'équipement via une interface de synchronisation externe de ladite base.

9. - Procédé selon l'une au moins des revendications 6 à 8 **caractérisé en ce que** l'étape d'adaptation de la synchronisation des échanges d'informations lors des cycles de communication entre les combinés de la première chaîne d'équipements et la base de la première chaîne d'équipements en fonction d'une synchronisation des échanges d'informations lors des cycles de communication entre le premier équipement de la deuxième chaîne d'équipements et le deuxième équipement de la deuxième chaîne d'équipements comporte, lorsque le premier équipement de la deuxième chaîne d'équipements est actif lors d'une mise en activité du premier sous-réseau, l'étape supplémentaire consistant à bloquer l'envoi d'un signal de balise émis par la base de la première chaîne d'équipements tant que le signal de synchronisation n'a pas été reçu et pris en compte par la base de la première chaîne d'équipements.

10. Procédé selon l'une au moins des revendications 6 à 8 **caractérisé en ce que** l'étape d'adaptation de la synchronisation des échanges d'informations lors des cycles de communication entre les combinés de la première chaîne d'équipements et la base de la première chaîne d'équipements en fonction d'une synchronisation des échanges d'informations lors des cycles de communication entre le premier équipement de la deuxième chaîne d'équipements et le deuxième équipement de la deuxième chaîne d'équipements comporte, lorsque le premier équipement de la deuxième chaîne d'équipements n'est pas actif lors d'une mise en activité du premier sous-réseau, les différentes étapes supplémentaires consistant à :
- émettre un signal de balise au moyen de la base de la première chaîne d'équipements pour caler dans le temps les différents combinés de la première chaîne d'équipements;
- détecter une mise en activité du premier équipement de la deuxième chaîne d'équipements ; le cas échéant, décaler progressivement la synchronisation des échanges d'informations lors des cycles de communication entre les combinés de la première chaîne d'équipements et la base de la première chaîne d'équipements jusqu'à ce que cette synchronisation soit en opposition de phase avec la synchronisation des échanges de cycles de communication entre le premier équipement de la deuxième chaîne d'équipements et le deuxième équipement de la deuxième chaîne d'équipements.

11. - Procédé selon l'une au moins des revendications précédentes **caractérisé en ce qu'**il comporte les différentes étapes supplémentaires consistant à :
- associer, au sein d'un deuxième dispositif de communication, une base d'une troisième chaîne d'équipements, constituant un troisième sous-réseau, avec un troisième équipement de la deuxième chaîne d'équipements;
- échanger des informations de communication entre le troisième équipement de la deuxième chaîne d'équipements et un autre équipement de la deuxième chaîne d'équipements pendant les fenêtres temporelles de transition des cycles de communication échangées entre les combinés de la troisième chaîne d'équipements et la base de la troisième chaîne d'équipements.

12. - Procédé selon l'une au moins des revendications précédentes **caractérisé en ce qu'**il comporte les différentes étapes supplémentaires consistant à :
- associer, au sein d'un deuxième dispositif de communication, une base d'une chaîne d'équipements supplémentaire, constituant un sous-réseau supplémentaire, avec un deuxième équipement de la première chaîne d'équipements;
- échanger des informations de communication entre le deuxième équipement de la première chaîne d'équipements et la base de la première chaîne d'équipements pendant les fenêtres temporelles de transition des cycles de communication échangées entre des combinés de la chaîne d'équipements supplémentaire et la base de la chaîne d'équipements supplémentaire.

13. - Procédé selon l'une au moins des revendications précédentes **caractérisé en ce qu'**il comporte l'étape supplémentaire consistant à faire émettre deux signaux de balise par la base du sous-réseau de la deuxième chaîne d'équipement.

14. - Dispositif de communication **apte à mettre en oeuvre** le procédé selon l'une au moins des revendications précédentes, pour communiquer simultanément sur plusieurs sous-réseaux de communication fonctionnant selon la norme DECT, chaque sous-réseau étant constitué d'une chaîne d'équipements, avec notamment un premier sous réseau constitué d'une première chaîne d'équipements et un deuxième sous-réseau constitué d'une deuxième chaîne d'équipements, chaque chaîne d'équipement comportant une base et un ensemble de combinés abonnés à ladite base, chaque combiné d'une chaîne d'équipement communiquant avec la base à laquelle il est abonné en échangeant, par voie radio, des informations lors de cycles de communication divisés en un ensemble de fenêtres temporelles qui se distinguent en :
- un premier sous-ensemble de fenêtres temporelles - dites fenêtres temporelles actives - susceptibles d'être utilisées pour véhiculer des informations de communication entre ladite base et un des combinés abonnés à ladite base ;
- un deuxième sous-ensemble de fenêtres temporelles - dites fenêtres temporelles de transition - qui ne sont pas susceptibles d'être utilisées pour véhiculer des informations de communication entre ladite base et un des combinés abonnés à ladite base ;
**caractérisé en ce que** le dispositif de communication comporte :
- une base d'une première chaîne d'équipements ;
- un premier équipement d'une deuxième chaîne d'équipements;
- des moyens pour échanger des informations de communication entre le premier équipement de la deuxième chaîne d'équipements et un deuxième équipement de la deuxième chaîne d'équipements pendant les fenêtres temporelles de transition des cycles de communication échangées entre les combinés de la première chaîne d'équipements et la base de la première chaîne d'équipements.

15. - Dispositif de communication selon la revendication précédente **caractérisé en ce que** le premier équipement de la deuxième chaîne d'équipements est un combiné de la deuxième chaîne d'équipements, et le deuxième équipement de la deuxième chaîne d'équipements la base de la deuxième chaîne d'équipements.

16. - Dispositif de communication selon la revendication 14 **caractérisé en ce que** le premier équipement de la deuxième chaîne d'équipements est la base de la deuxième chaîne d'équipements, et le deuxième équipement de la deuxième chaîne d'équipements un combiné de la deuxième chaîne d'équipements.

## Claims

1. A method for simultaneous communication on several communication sub-networks operating according to the DECT standard, each sub-network being comprised of an equipment chain, particularly with a first sub-network (300) comprised of a first equipment chain and a second sub-network (301) comprised of a second equipment chain, in which:
- each equipment chain comprises a base and a set of handsets subscribed to said base;
- each handset from an equipment chain communicates with the base to which it is subscribed by exchanging, by radio, information during communication cycles;
- each communication cycle is divided into a set of time windows which are distinguished by:
- a first sub-set of time windows, known as active time windows, likely to be utilized to convey communication information between said base and any one of the handsets subscribed to said base;
- a second sub-set of time windows, known as transition time windows, which are not likely to be utilized to convey communication information between said base and any one of the handsets subscribed to said base;
**characterized in that** the method comprises various steps consisting of:
- assembling, within a communication device, particularly a first communication device (302), the base (B1) of the first equipment chain with a first piece of equipment (C'2) from the second equipment chain;
- exchanging communication information between the first piece of equipment (C'2) from the second equipment chain and a second piece of equipment from the second equipment chain during transition time windows of the communication cycles between the handsets from the first equipment chain and the base of the first equipment chain.

2. The method according to the previous claim, **characterized in that** the first piece of equipment from the second equipment chain is a handset from the second equipment chain, and **in that** the second piece of equipment from the second equipment chain is the base of the second equipment chain.

3. The method according to claim 1 **characterized in that** the first piece of equipment from the second equipment chain is the base of the second equipment chain, and the second piece of equipment from the second equipment chain is a handset from the second equipment chain.

4. The method according to at least one of the previous claims **characterized in that** the method comprises the additional step consisting of providing the base of the first equipment chain with audio functions.

5. The method according to at least one of the previous claims **characterized in that** the method comprises the additional step consisting of adapting a synchronization of information exchanges during communication cycles between the handsets from the first equipment chain and the base of the first equipment chain according to a synchronization of information exchanges during communication cycles between the first piece of equipment from the second equipment chain and the second piece of equipment from the second equipment chain.

6. The method according to the previous claim **characterized in that** the method comprises the additional step consisting of sending a synchronization signal from the first piece of equipment from the second equipment chain to the base of the first equipment chain to adapt the synchronization of information exchanges during communication cycles between the handsets from the first equipment chain and the base of the first equipment chain according to the synchronization of information exchanges during communication cycles between the first piece of equipment from the second equipment chain and the second piece of equipment from the second equipment chain.

7. The method according to the previous claim **characterized in that** the synchronization signal is sent by a conductive link connecting the base of the first equipment chain to the first piece of equipment from the second equipment chain.

8. The method according to at least one of claims 6 or 7 **characterized in that** the synchronization signal is sent to the base of the first equipment chain via an external synchronization interface of said base.

9. The method according to at least one of claims 6 to 8 **characterized in that** the step of adapting the synchronization of information exchanges during communication cycles between the handsets of the first equipment chain and the base of the first equipment chain according to a synchronization of information exchanges during communication cycles between the first piece of equipment from the second equipment chain and the second piece of equipment from the second equipment chain comprises, when the first piece of equipment from the second equipment chain is active during activation of the first sub-network, the additional step consisting of blocking the sending of a beacon signal sent by the base of the first equipment chain as the synchronization signal has not been received and taken into consideration by the base of the first equipment chain.

10. The method according to at least one of claims 6 to 8, **characterized in that** the step of adapting the synchronization of information exchanges during communication cycles between the handsets of the first equipment chain and the base of the first equipment chain according to a synchronization of information exchanges during communication cycles between the first piece of equipment from the second equipment chain and the second piece of equipment from the second equipment chain comprises, when the first piece of equipment from the second equipment chain is not active during activation of the first sub-network, different additional steps consisting of:
- sending a beacon signal by means of the base of the first equipment chain to lock the different handsets from the first equipment chain in time;
- detecting an activation of the first piece of equipment from the second equipment chain; if necessary, progressively unlocking the synchronization of information exchanges during communication cycles between the handsets from the first equipment chain and the base of the first equipment chain until this synchronization is out of phase with the synchronization of exchanges of communication cycles between the first piece of equipment from the second equipment chain and the second piece of equipment from the second equipment chain.

11. The method according to at least one of the previous claims **characterized in that** the method comprises the different additional steps consisting of:
- associating, within a second communication device, a base of a third equipment chain, comprising a third sub-network, with a third piece of equipment from the second equipment chain;
- exchanging communication information between the third piece of equipment from the second equipment chain and another piece of equipment from the second equipment chain during transition time windows of the communication cycles exchanged between the handsets from the third equipment chain and the base of the third equipment chain.

12. The method according to at least one of the previous claims **characterized in that** the method comprises the different additional steps consisting of:
- associating, within a second communication device, a base of an additional equipment chain, comprising an additional sub-network, with a second piece of equipment from the first equipment chain;
- exchanging communication information between the second piece of equipment from the first equipment chain and the base of the first equipment chain during the transition time windows of the communication cycles exchanged between the handsets from the additional equipment chain and the base of the additional equipment chain.

13. The method according to at least one of the previous claims **characterized in that** the method comprises the additional step consisting of causing two beacon signals to be sent by the base of the sub-network of the second equipment chain.

14. A communication device able to implement the method according to at least one of the previous claims, to simultaneously communicate over several communication sub-networks operating according to the DECT standard, each sub-network being comprised of an equipment chain, with in particular a first sub-network comprised of a first equipment chain and a second sub-network comprised of a second equipment chain, each equipment chain comprising a base and a set of handsets subscribed to said base, each handset from an equipment chain communicating with the base to which it is subscribed by exchanging, by radio, information during communication cycles divided into one set of time windows that are distinguished by:
- a first subset of time windows, known as active time windows, likely to be utilized to convey communication information between said base and one of the handsets subscribed to said base;
- a second subset of time windows, known as transition time windows, which are not likely to be utilized to convey communication information between said base and one of the handsets subscribed to said base;
**characterized in that** the communication device comprises:
- a base from a first equipment chain;
- a first piece of equipment from a second equipment chain;
- means to exchange communication information between the first piece of equipment from the second equipment chain and a second piece of equipment from the second equipment chain during transition time windows of the communication cycles exchanged between the handsets from the first equipment chain and the base of the first equipment chain.

15. The communication device according to the previous claim **characterized in that** the first piece of equipment from the second equipment chain is a handset from the second equipment chain and the second piece of equipment from the second equipment chain is the base of the second equipment chain.

16. The communication device according to claim 14 **characterized in that** the first piece of equipment from the second equipment chain is the base of the second equipment chain, and the second piece of equipment from the second equipment chain is a handset from the second equipment chain.

## Patentansprüche

1. Verfahren zur gleichzeitigen Kommunikation auf mehreren Kommunikationsunternetzen, die gemäß der Norm DECT funktionieren, wobei jedes Unternetz aus einer Kette von Ausstattungen besteht, mit insbesondere einem ersten Unternetz (300), das aus einer ersten Kette von Ausstattungen besteht, und einem zweiten Unternetz (301), das aus einer zweiten Kette von Ausstattungen besteht, in welchem:
- jede Ausstattungskette eine Basis und eine Einheit von Handgeräten, die bei der Basis abonniert sind, aufweist,
- jedes Handgerät einer Ausstattungskette mit der Basis, bei der es abonniert ist, kommuniziert, indem es per Funk Informationen bei Kommunikationszyklen austauscht,
- jede Kommunikationszyklus in eine Einheit von Zeitfenstern unterteilt ist, die sich wie folgt unterscheiden:
- eine erste Untereinheit von Zeitfenstern, aktive Zeitfenster genannt, die verwendet werden können, um Kommunikationsinformationen zwischen der Basis und einem beliebigen der Handgeräte, die bei der Basis abonniert sind, zu transportieren,
- eine zweite Untereinheit von Zeitfenstern, Übergangszeitfenster genannt, die nicht verwendet werden können, um Kommunikationsinformationen zwischen der Basis und einem beliebigen der Handgeräte, die bei der Basis abonniert sind, zu transportieren,
**dadurch gekennzeichnet, dass** es die folgenden unterschiedlichen Schritte aufweist, bestehend aus:
- innerhalb einer Kommunikationsvorrichtung, insbesondere eine erste Kommunikationsvorrichtung (302), die Basis (B1) der ersten Ausstattungskette mit einer ersten Ausstattung (C'2) der zweiten Ausstattungskette zu vereinen,
- Kommunikationsinformationen zwischen der ersten Ausstattung (C'2) der zweiten Ausstattungskette und einer zweiten Ausstattung der zweiten Ausstattungskette während den Übergangszeitfenstern der Kommunikationszyklen zwischen den Handgeräten der ersten Ausstattungskette und der Basis der ersten Ausstattungskette auszutauschen.

2. Verfahren nach dem vorhergehenden Anspruch, **dadurch gekennzeichnet dass** die erste Ausstattung der zweiten Ausstattungskette ein Handgerät der zweiten Ausstattungskette ist, und dass die zweite Ausstattung der zweiten Ausstattungskette die Basis der zweiten Ausstattungskette ist.

3. Verfahren nach Anspruch 1, **dadurch gekennzeichnet, dass** die erste Ausstattung der zweiten Ausstattungskette die Basis der zweiten Ausstattungskette ist, und dass die zweite Ausstattung der zweiten Ausstattungskette ein Handgerät der zweiten Ausstattungskette ist.

4. Verfahren nach mindestens einem der vorhergehenden Ansprüche, **dadurch gekennzeichnet, dass** es den zusätzlichen Schritt aufweist, der darin besteht, die Basis der ersten Ausstattungskette mit Audiofunktionen zu versehen.

5. Verfahren nach mindestens einem der vorhergehenden Ansprüche, **dadurch gekennzeichnet, dass** es den zusätzlichen Schritt aufweist, der darin besteht, eine Synchronisation der Informationsaustausche bei den Kommunikationszyklen zwischen den Handgeräten der ersten Ausstattungskette und der Basis der ersten Ausstattungskette in Abhängigkeit von einer Synchronisation der Informationsaustausche bei den Kommunikationszyklen zwischen der ersten Ausstattung der zweiten Ausstattungskette und der zweiten Ausstattung der zweiten Ausstattungskette anzupassen.

6. Verfahren nach dem vorhergehenden Anspruch, **dadurch gekennzeichnet, dass** es den zusätzlichen Schritt aufweist, der darin besteht, von der ersten Ausstattung der zweiten Ausstattungskette zu der Basis der ersten Ausstattungskette ein Synchronisationssignal zu übertragen, um die Synchronisation der Informationsaustausche bei den Kommunikationszyklen zwischen den Handgeräten der ersten Ausstattungskette und der Basis der ersten Ausstattungskette in Abhängigkeit von der Synchronisation der Informationsaustausche bei den Kommunikationszyklen zwischen der ersten Ausstattung der zweiten Ausstattungskette und der zweiten Ausstattung der zweiten Ausstattungskette anzupassen.

7. Verfahren nach dem vorhergehenden Anspruch, **dadurch gekennzeichnet, dass** das Synchronisationssignal von einer leitenden Verbindung übertragen wird, die die Basis der ersten Ausstattungskette mit der ersten Ausstattung der zweiten Ausstattungskette verbindet.

8. Verfahren nach mindestens einem der Ansprüche 6 oder 7, **dadurch gekennzeichnet, dass** das Synchronisationssignal zu der Basis der ersten Ausstattungskette über eine externe Synchronisationsschnittstelle der Basis übertragen wird.

9. Verfahren nach mindestens einem der Ansprüche 6 bis 8, **dadurch gekennzeichnet, dass** der Anpassungsschritt der Synchronisation der Informationsaustausche bei den Kommunikationszyklen zwischen den Handgeräten der ersten Ausstattungskette und der Basis der ersten Ausstattungskette in Abhängigkeit von einer Synchronisation der Informationsaustausche bei den Kommunikationszyklen zwischen der ersten Ausstattung der zweiten Ausstattungskette und der zweiten Ausstattung der zweiten aus Ausstattungskette, wenn die erste Ausstattung der zweiten Ausstattungskette während eines Aktivieren des ersten Unternetzes aktiv ist, den zusätzlichen Schritt aufweist, der darin besteht, das Senden eines Bakensignals, das von der Basis der ersten Ausstattungskette gesendet wird, zu blockieren, solange das Synchronisationssignal nicht von der Basis der ersten Ausstattungskette empfangen und berücksichtigt wurde.

10. Verfahren nach mindestens einem der Ansprüche 6 bis 8, **dadurch gekennzeichnet, dass** der Anpassungsschritt der Synchronisation der Informationsaustausche bei den Kommunikationszyklen zwischen den Handgeräten der ersten Ausstattungskette und der Basis der ersten Ausstattungskette in Abhängigkeit von einer Synchronisation der Informationsaustausche bei den Kommunikationszyklen zwischen der ersten Ausstattung der zweiten Ausstattungskette und der zweiten Ausstattung der zweiten Ausstattungskette, wenn die erste Ausstattung der zweiten Ausstattungskette bei einem Aktivieren des ersten Unternetzes nicht aktiv ist, die verschiedenen zusätzlichen Schritte aufweist, die aus Folgendem bestehen:
- Senden eines Bakensignals mittels der Basis der ersten Ausstattungskette, um die verschiedenen Handgeräte der ersten Ausstattungskette zeitlich abzustimmen,
- Erfassen eines Aktivierens der ersten Ausstattung der zweiten Ausstattungskette, gegebenenfalls allmähliches Verschieben der Synchronisation der Informationsaustausche bei den Kommunikationszyklen zwischen den Handgeräten der ersten Ausstattungskette und der Basis der ersten Ausstattungskette, bis diese Synchronisation mit der Synchronisation der Austausche von Kommunikationszyklen zwischen der ersten Ausstattung der zweiten Ausstattungskette und der zweiten Ausstattung der zweiten Ausstattungskette in Phasenopposition ist.

11. Verfahren nach mindestens einem der vorhergehenden Ansprüche, **dadurch gekennzeichnet, dass** es die verschiedenen zusätzlichen Schritte aufweist, bestehend aus:
- innerhalb einer zweiten Kommunikationsvorrichtung eine Basis einer dritten Ausstattungskette, die ein drittes Unternetz bildet, mit einer dritten Ausstattung der zweiten Ausstattungskette verbinden,
- Kommunikationsinformationen zwischen der dritten Ausstattung der zweiten Ausstattungskette und einer weiteren Ausstattung der zweiten Ausstattungskette während den Übergangszeitfenstern der Kommunikationszyklen, die zwischen den Handgeräten der dritten Ausstattungskette und der Basis der dritten Ausstattungskette ausgetauscht werden, austauschen.

12. Verfahren nach mindestens einem der vorhergehenden Ansprüche, **dadurch gekennzeichnet, dass** es die verschiedenen zusätzlichen Schritte aufweist, bestehend aus:
- innerhalb einer zweiten Kommunikationsvorrichtung eine Basis einer zusätzlichen Ausstattungskette, die ein zusätzliches Unternetz bildet, mit einer zweiten Ausstattung der ersten Ausstattungskette verbinden,
- Kommunikationsinformationen zwischen der zweiten Ausstattung der ersten Ausstattungskette und der Basis der ersten Ausstattungskette während den Übergangszeitfenstern der Kommunikationszyklen austauschen, die zwischen den Handgeräten der zusätzlichen Ausstattungskette und der Basis der zusätzlichen Ausstattungskette ausgetauscht werden.

13. Verfahren nach mindestens einem der vorhergehenden Ansprüche, **dadurch gekennzeichnet, dass** es den zusätzlichen Schritt aufweist, der darin besteht, von der Basis des Unternetzes der zweiten Ausstattungskette zwei Bakensignale senden zu lassen.

14. Kommunikationsvorrichtung, die das Verfahren nach mindestens einem der vorhergehenden Ansprüche umsetzen kann, um gleichzeitig auf mehreren Kommunikationsunternetzen zu kommunizieren, die gemäß der Norm DECT funktionieren, wobei jedes Unternetz aus einer Ausstattungskette besteht, mit insbesondere einem ersten Unternetz, das aus einer ersten Ausstattungskette besteht, und einem zweiten Unternetz, das aus einer zweiten Ausstattungskette besteht, wobei jede Ausstattungskette eine Basis und eine Einheit von Handgeräten aufweist, die bei der Basis abonniert sind, wobei jedes Handgerät einer Ausstattungskette mit der Basis, bei der es abonniert ist, kommuniziert, indem es per Funk Informationen bei Kommunikationszyklen austauscht, die in eine Einheit von Zeitfenstern unterteilt sind, die sich wie folgt unterscheiden:
- eine erste Untereinheit von Zeitfenstern, aktive Zeitfenster genannt, die verwendet werden können, um Kommunikationsinformationen zwischen der Basis und einem der Handgeräte, die bei der Basis abonniert sind, zu transportieren,
- eine zweite Untereinheit von Zeitfenstern, Übergangszeitfenster genannt, die nicht verwendet werden können, um Kommunikationsinformationen zwischen der Basis und einem der Handgeräte, die bei der Basis abonniert sind, zu transportieren,
**dadurch gekennzeichnet, dass** die Kommunikationsvorrichtung Folgendes aufweist:
- eine Basis einer ersten Ausstattungskette,
- eine erste Ausstattung einer zweiten Ausstattungskette,
- Mittel, um Kommunikationsinformationen zwischen der ersten Ausstattung der zweiten Ausstattungskette und einer zweiten Ausstattung der zweiten Ausstattungskette während den Übergangszeitfenstern der Kommunikationszyklen auszutauschen, die zwischen den Handgeräten der ersten Ausstattungskette und der Basis der ersten Ausstattungskette ausgetauscht werden.

15. Kommunikationsvorrichtung nach dem vorhergehenden Anspruch, **dadurch gekennzeichnet, dass** die erste Ausstattung der zweiten Ausstattungskette ein Handgerät der zweiten Ausstattungskette ist, und dass die zweite Ausstattung der zweiten Ausstattungskette die Basis der zweiten Ausstattungskette ist.

16. Kommunikationsvorrichtung nach Anspruch 14, **dadurch gekennzeichnet, dass** die erste Ausstattung der zweiten Ausstattungskette die Basis der zweiten Ausstattungskette ist, und dass die zweite Ausstattung der zweiten Ausstattungskette ein Handgerät der zweiten Ausstattungskette ist.
